# EUROPÄISCHE PATENTSCHRIFT

(11) **EP 0 990 567 B1**
(45) Veröffentlichungstag und Bekanntmachung des Hinweises auf die Patenterteilung: **02.05.2003**
(21) Anmeldenummer: 99890310.8
(22) Anmeldetag: 28.09.1999
(51) Int. Cl.: B60R 21/32

(54) **Airbagvorrichtung**
Airbag device
Sac gonflable

(30) Priorität: 02.10.1998 AT 164898
(43) Veröffentlichungstag der Anmeldung: 05.04.2000
(73) Patentinhaber: Hirtenberger Präzisionstechnik GmbH, 2552 Hirtenberg (AT)
(72) Erfinder: Eibensteiner, Erich, Dipl.-Ing. Dr., 1110 Wien (AT); Sperka, Peter, Ing., 2380 Perchtoldsdorf (AT); Hatzl, Robert, Dipl.-Ing. Dr., 2601 Siedlung Maria Theresia (AT)
(74) Vertreter: Müllner, Erwin, Dr.

(56) Entgegenhaltungen:
- EP-A- 0 861 762
- US-A- 5 762 367

## Beschreibung

Die vorliegende Erfindung betrifft eine Airbagvorrichtung für einen Fahrgastraum eines Kraftfahrzeuges, die einen Gassack aufweist, welcher durch eine Fülleinrichtung, die von einer Sensoreinheit auslösbar ist, aufblasbar ist, wobei ein band- oder fadenförmiges Abtastmedium vorgesehen ist, das mit einer Codierung versehen ist und das mit dem Vorderteil des Gassackes verbunden ist und wobei weiters eine Lesestation zur Abtastung der Codierung vorgesehen ist.

Airbagvorrichtungen sind ein wirksamer Unfallschutz und aus der Sicherheitstechnik von Kraftfahrzeugen nicht mehr wegzudenken. Im Falle eines Unfalls wird der Gassack extrem schnell aufgeblasen, sodass der Fahrgast in den aufgeblasenen Sack fällt und auf diese Weise mit dem Kopf relativ weich landet. Es müssen über hundert Liter Gas in etwa 25 ms in den Gassack gebracht werden, was entsprechend hohe Kräfte beim Aufblasen erfordert. Problematisch ist ein Airbag daher dann, wenn der Fahrgast nicht in der vorgesehenen Position (an der Rückenlehne angelehnt) sitzt, sondern z.B. etwas auf dem Boden sucht und sich mit dem Kopf unmittelbar vor dem Gassack befindet. Kommt es in dieser Situation zu einem Auslösen der Airbagvorrichtung, wird der Gassack mit großer Kraft gegen den Kopf des Fahrgastes gedrückt, was zu schweren Halsverletzungen führen kann. Besonderes gefährdet sind dabei Kinder auf Kindersitzen.

Es ist daher in der gattungsbildenden EP-812741 eine Vorrichtung der eingangs genannten Art vorgeschlagen worden. Ein band- oder fadenförmiges Abtastmedium ist mit dem Vorderteil des Gassackes verbunden und bewegt sich daher zusammen mit diesem während des Aufblasens in das Fahrzeuginnere. Es ist mit einer Codierung versehen, die in einer Lesestation abgetastet wird, während das Band vom Vorderteil des Gassackes durch die Lesestation durchgezogen wird. Auf diese Weise kann der vom Vorderteil des Gassackes zurückgelegte Weg in Abhängigkeit von der Zeit bestimmt werden. Bleibt der Weg stark hinter den üblichen Werten zurück, so befindet sich ein Hindernis vor dem Gassack, und man kann entsprechende Gegenmaßnahmen einleiten (z.B. Ableiten des weiteren Gasstromes nach außen).

Versuche haben nun gezeigt, dass diese Messung, wie sie in der EP-812 741 A angedeutet ist, ohne weitere Maßnahmen nicht durchführbar ist. Wie im Rahmen der vorliegenden Erfindung festgestellt wurde, erreicht das Band nämlich Geschwindigkeiten bis zu 300 km/h, und auch wenn der Vorderteil des Sackes auf Grund eines Hindernisses stehen bleibt, läuft das Band auf Grund seiner Trägheit mit fast unveränderter Geschwindigkeit weiter.

Es ist Aufgabe der vorliegenden Erfindung, eine Vorrichtung der eingangs genannten Art so zu verbessern, dass reproduzierbare Messergebnisse erhalten werden.

Diese Aufgabe wird bei einer Vorrichtung der eingangs genannten Art erfindungsgemäß dadurch gelöst, dass eine Bremsvorrichtung für das Abtastmedium vorgesehen ist.

Überraschender Weise lässt sich durch eine relativ geringe Bremskraft (einige Newton) das Abtastmedium von der Höchstgeschwindigkeit (bis zu 300 km/h) bis zum Stillstand innerhalb weniger Millimeter oder höchstens Zentimeter abbremsen. Diese geringe Bremskraft belastet das Abtastmedium auch nicht so stark, dass es zu Dehnungen oder gar Brüchen kommen kann. Somit sind gut reproduzierbare Messwerte gesichert, was für eine zuverlässige Detektion von Hindernissen notwendig ist.

Vorzugsweise ist die Bremswirkung der Bremsvorrichtung einstellbar. Da die Größe der Bremswirkung kritisch für das Erzielen präziser Messwerte ist, lässt sich so jede Airbagvorrichtung optimieren, sodass Toleranzen bei der Herstellung keine Rolle spielen.

Gemäß einer bevorzugten Ausführungsform ist vorgesehen, dass die Bremsvorrichtung als Blattfeder ausgebildet ist, die das Abtastmedium gegen eine Unterlage drückt. Dies ist eine einfache, zuverlässige Ausführungsform, die nahezu geschwindigkeitsunabhängig eine konstante Bremskraft erzeugt.

Bei dieser Ausführungsform kann man die Bremskraft dadurch einstellbar machen, dass die Position von zumindest einem Ende der Blattfeder einstellbar ist.

Schließlich ist es günstig, wenn das Abtastmedium in einem Vorratsraum zickzackförmig angeordnet ist. Die naheliegenste Ausführung, das Abtastmedium auf einer ungebremsten Spule aufzuwickeln, hat sich nämlich als nachteilig erwiesen: beim Abwickeln bekommt die Spule ein hohes Trägheitsmoment, sodass das Abtastmedium mit großer Kraft auf die Bremse fällt, falls sich ein Hindernis im Weg des Gassackes befindet. Bei der zickzackförmigen Ausbildung gibt es keinerlei vermeidbare Trägheitskräfte: nur der nach vorne gezogene Teil des Abtastmediums bewegt sich, der noch nicht verwendete Teil befindet sich in Ruhe.

Um gleichmäßige Kräfte auf das Abtastmedium sicherzustellen ist es zweckmäßig, wenn am Ausgang des Vorratsraums zwei Führungen vorgesehen sind, durch die das Abtastmedium hindurch in Richtung zur Bremsvorrichtung geführt ist. Auf diese Weise kommt es kaum zu Reibung am Ausgang des Vorratsraumes. Diese Reibungskräfte würden nämlich im Rhythmus der Zickzackbewegung schwanken, was unerwünscht ist; es soll möglichst nur eine konstante Bremskraft auf das Abtastmedium wirken.

Gemäß einer anderen Ausführungsform ist das Abtastmedium auf einer Spule aufgewickelt, wobei die Bremsvorrichtung auf die Spule wirkt. Dies erleichtert zwar die Unterbrinung des Abtastmediums im Gehäuse, dies wird aber durch größere Trägheitskräfte bewirkt: es ist - während der Gassack aufgeblasen wird - immer das gesamte Abtastmedium in Bewegung, zum Teil in linearer Bewegung, zum Teil in Rotationsbewegung, und auch die Spule weist eine Trägheit auf. Damit sind natürlich größere Bremskräfte notwendig, die von der auf die Spule wirkenden Bremse aufgebracht werden müssen.

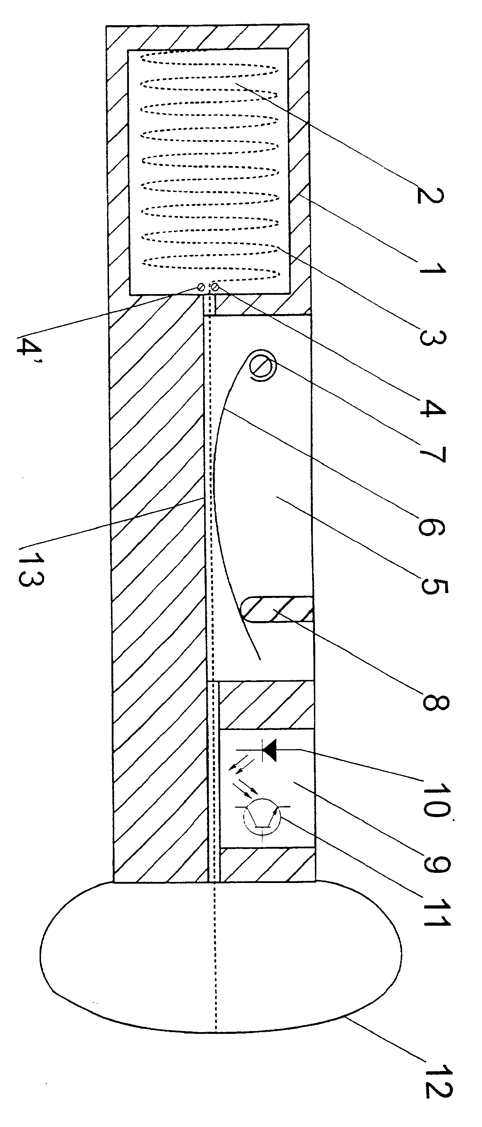

Anhand der beiliegenden Zeichnung wird die Erfindung näher erläutert. Die einzige Fig. zeigt einen Schnitt durch eine erfindungsgemäße Airbagvorrichtung.

In einem Gehäuse 1 ist ein Vorratsraum 2 ausgespart, in dem ein Abtastmedium 3 zickzackförmig angeordnet ist. Am Ausgang des Vorratsraums 2 sind zwei Führungen 4, 4' vorgesehen, durch die das Abtastmedium 3 hindurchgeführt ist. Es läuft weiter zu einer Bremsvorrichtung 5, die im Wesentlichen aus einer Blattfeder 6 besteht. Diese ist an einem Ende um eine Achse 7 drehbar gelagert, mit ihrem anderen Ende ruht sie an einem Vorsprung 8. Sie drückt das Abtastmedium 3 gegen eine von einem Abschnitt des Gehäuses 1 gebildete Unterlage 13, wodurch das Abtastmedium 3 - wenn es sich durch die Bremsvorrichtung 5 bewegt - durch Reibung abgebremst wird. Der Vorsprung 8 kann verstellbar sein, er könnte z.B. als Schraube ausgeführt sein, sodass die Bremskraft einstellbar ist. Das Abtastmedium 3 läuft weiter zu einer Lesestation 9, die durch eine LED 10 und einen lichtempfindlichen Halbleiter 11 angedeutet ist. Danach ist das Abtastmedium 3 in einen Gassack 12 geführt, wo es an dessen Vorderteil an der Innenseite befestigt ist, z.B. angenäht ist. Der Gassack 12 ist mit dem Gehäuse 1 dicht verbunden. Er ist durch eine nicht dargestellte Fülleinrichtung aufblasbar. Diese Fülleinrichtung wird durch eine Sensoreinheit ausgelöst.

Das Abtastmedium 3 ist als Band ausgebildet, das abwechselnd schwarz und weiß eingefärbt ist. Diese Einfärbung ist durch die strichlierte Darstellung angedeutet.

Die erfindungsgemäße Vorrichtung funktioniert wie folgt: Im Falle eines Unfalls, der von der Sensoreinheit erkannt wird, löst diese die Fülleinrichtung aus, die daraufhin den Gassack 12 aufbläst. Dadurch bewegt sich dessen Vorderteil nach rechts (wie in der Fig. gesehen) und zieht das Abtastmedium 3, das an dessen Vorderteil befestigt ist, ebenfalls nach rechts. Das Abtastmedium 3 bewegt sich daher an der Lesestation 9 vorbei. Die Lesestation 9 ist als Reflexionslichtschranke ausgebildet. Eine LED 10 leuchtet auf das abwechselnd schwarz und weiß eingefärbte Band, das reflektierte Licht fällt auf einen lichtempfindlichen Halbleiter 11, der daher immer dann, wenn ein weißer Abschnitt vorbeibewegt wird, einen Stromimpuls erzeugt. Durch Zählen der Stromimpulse weiß man, um wie viele weiße Abschnitte sich die Vorderseite des Gassackes 12 bereits bewegt hat. Durch gleichzeitige Messung der Zeit erhält man somit den zurückgelegten Weg in Abhängigkeit von der Zeit und kann diese Werte mit Sollwerten vergleichen.

Prallt die Vorderseite des Gassackes 12 auf ein Hindernis auf, so wird diese rasch abgebremst und bringt keine beschleunigende Kraft mehr auf das Abtastmedium 3 auf. Auf Grund seiner Trägheit würde sich das Abtastmedium 3 aber weiter bewegen und im Gassack 12 eine Art Knäuel bilden, wenn dem nicht die Bremsvorrichtung 5 entgegenwirken würde. Durch die Bremsvorrichtung 5 wird auch das Abtastmedium 3 gebremst und bewegt sich höchstens noch um einige Zentimeter in den Gassack 12 hinein. Jedenfalls ist von der Lesestation 9 ein deutlicher Geschwindigkeitsabfall feststellbar, auf Grund dessen mit Sicherheit das Hindernis erkannt wird. Durch eine entsprechende Auswerteschaltung werden Ventile angesteuert, die entweder das Gas der Fülleinrichtung nach außen ableiten (und nicht mehr weiter in den Gassack 12), die Zündung weiterer pyrotechnischer Gasgeneratoren blockieren oder sonst irgendwie die weitere Füllung des Gassackes 12 verhindern oder verzögern.

Zwischen der Bremsvorrichtung 5 und dem Vorratsraum 2 ist nur ein kleiner Abschnitt des Abtastmediums 3 in Bewegung, sodass die Trägheitskräfte in diesem Abschnitt gering sind. Durch die zickzackförmige Unterbringung innerhalb des Vorratsraums 2 ruht dort das Abtastmedium 3, bis es aus dem Vorratsraum 2 durch die beiden Führungen 4,4' herausgezogen wird. Durch die beiden Führungen 4,4' werden die Reibungskräfte, die durch das abwechselnde Umlenken des zickzackförmig angeordneten Abtastmediums 3 intermittierend auftreten würden, stark reduziert, sodass hauptsächlich nur die konstante Kraft der Bremsvorrichtung 5 sowie die beschleunigende Kraft des Gassackes 12 auf das Abtastmedium 3 wirken.

Die vorliegende Erfindung ist natürlich nicht auf die beschriebene bevorzugte Ausführungsform beschränkt. Es ist z.B. möglich, mehrere Abtastmedien vorzusehen, sodass auch außermittige Hindernisse zuverlässig erkannt werden. Auch kann die Bremsvorrichtung anders aufgebaut sein, z.B. durch Schaumstoff, der abwechselnd von oben und unten in die Bahn des Abtastmediums ragt, sodass sich eine Art Labyrinth ergibt. Beim Herausziehen des Abtastmediums wird dann der Schaumstoff zusammengedrückt und erzeugt eine Bremskraft.

## Patentansprüche

1. Airbagvorrichtung für einen Fahrgastraum eines Kraftfahrzeuges, die einen Gassack (12) aufweist, welcher durch eine Fülleinrichtung, die von einer Sensoreinheit auslösbar ist, aufblasbar ist, wobei ein band- oder fadenförmiges Abtastmedium (3) vorgesehen ist, das mit einer Codierung versehen ist und das mit dem Vorderteil des Gassackes (12) verbunden ist und wobei weiters eine Lesestation (9) zur Abtastung der Codierung vorgesehen ist, **dadurch gekennzeichnet, dass** eine Bremsvorrichtung (5) für das Abtastmedium (3) vorgesehen ist.

2. Airbagvorrichtung nach Anspruch 1, **dadurch gekennzeichnet, dass** die Bremswirkung der Bremsvorrichtung (5) einstellbar ist.

3. Airbagvorrichtung nach Anspruch 1 oder 2, **dadurch gekennzeichnet, dass** die Bremsvorrichtung (5) als Blattfeder (6) ausgebildet ist, die das Abtastmedium (3) gegen eine Unterlage (13) drückt.

4. Airbagvorrichtung nach Anspruch 3, **dadurch gekennzeichnet, dass** die Position von zumindest einem Ende der Blattfeder (6) einstellbar ist.

5. Airbagvorrichtung nach einem der Ansprüche 1-4, **dadurch gekennzeichnet, dass** das Abtastmedium (3) in einem Vorratsraum (2) zickzackförmig angeordnet ist.

6. Airbagvorrichtung nach Anspruch 5, **dadurch gekennzeichnet, dass** am Ausgang des Vorratsraums (2) zwei Führungen (4,4') vorgesehen sind, durch die das Abtastmedium (3) hindurch in Richtung zur Bremsvorrichtung (5) geführt ist.

7. Airbagvorrichtung nach einem der Ansprüche 1 oder 2, **dadurch gekennzeichnet, dass** das Abtastmedium auf einer Spule aufgewickelt ist und dass die Bremsvorrichtung auf die Spule wirkt.

## Claims

1. Airbag device for a passenger compartment of a motor vehicle, having a gas bag (12) which is inflatable through a filler device triggered by a sensor unit, wherein a tape or thread-like sensing medium (3) is provided which is provided with a code and which is in contact with the front part of the gas bag (12) and wherein there is furthermore provided a reading station (9) for scanning the code, **characterised in that** a brake device (5) is provided for the sensing medium (3) .

2. Airbag device according to claim 1, **characterised in that** the brake effect of the brake device (5) is adjustable.

3. Airbag device according to claim 1 or 2, **characterised in that** the brake device (5) is constructed as a leaf spring (6) which presses the sensing medium (3) against a substrate (13).

4. Airbag device according to claim 3, **characterised in that** the position of at least one end of the leaf spring (6) can be adjusted.

5. Airbag device according to one of the claims 1-4, **characterised in that** the sensing medium (3) is arranged zigzag-like in a storage space (2).

6. Airbag device according to claim 5, **characterised in that** at the outlet of the storage space (2) are provided two guides (4, 4') through which the sensing medium (3) is guided in the direction of the brake device (5).

7. Airbag device according to one of the claims 1 or 2, **characterised in that** the sensing medium is wound onto a spool and that the brake device acts upon the spool.

## Revendications

1. Dispositif de coussin gonflable («airbag») pour un habitacle de passagers d'un véhicule automobile, dispositif qui comporte un sac ou coussin à gaz (12) qui est susceptible d'être gonflé par un organe de remplissage susceptible d'être déclenché par une unité de capteur, dispositif dans lequel est prévu un moyen d'analyse (3) en forme de bande ou de fil, qui est muni d'un codage et qui est relié à la partie avant du coussin à gaz (12), et dispositif dans lequel est en outre prévu un poste de lecture (9) pour analyser le codage, **caractérisé en ce qu'**est prévu un organe de freinage (5) pour le moyen d'analyse (3).

2. Dispositif de coussin gonflable selon la revendication 1, **caractérisé en ce que** l'effet de freinage de l'organe de freinage (5) est réglable.

3. Dispositif de coussin gonflable selon la revendication 1 ou 2, **caractérisé en ce que** l'organe de freinage (5) est réalisé sous la forme d'un ressort à lame (6), qui presse le moyen d'analyse (3) contre une surface d'appui (13).

4. Dispositif de coussin gonflable selon la revendication 3, **caractérisé en ce que** la position d'au moins une extrémité du ressort à lame (6) est réglable.

5. Dispositif de coussin gonflable selon l'une des revendications 1 à 4, **caractérisé en ce que** le moyen d'analyse (3) est disposé en zigzag dans un espace de réserve (2).

6. Dispositif de coussin gonflable selon la revendication 5, **caractérisé en ce que** sont prévus, à la sortie de l'espace de réserve (2), deux guidages (4, 4') par l'intermédiaire desquels le moyen d'analyse (3) est guidé vers l'extérieur dans la direction de l'organe de freinage (5).

7. Dispositif de coussin gonflable selon l'une des revendications 1 ou 2, **caractérisé en ce que** le moyen d'analyse est bobiné sur une bobine et **en ce que** l'organe de freinage agit sur la bobine.
